Europäisches Patentamt

(19) European Patent Office

Office européen des brevets

(11) Publication number: **0 217 817 B1**

(12) **EUROPEAN PATENT SPECIFICATION**

(45) Date of publication of patent specification :
08.01.92 Bulletin 92/02

(51) Int. Cl.⁵ : **A01G 27/00**

(21) Application number : 86901460.5

(22) Date of filing : 03.03.86

(86) International application number :
PCT/GB86/00110

(87) International publication number :
WO 86/05067 12.09.86 Gazette 86/20

(54) WATER-CONTROLLED PLANT GROWING DEVICE.

(30) Priority : 01.03.85 GB 8505300

(43) Date of publication of application :
15.04.87 Bulletin 87/16

(45) Publication of the grant of the patent :
08.01.92 Bulletin 92/02

(84) Designated Contracting States :
AT BE CH DE FR GB IT LI LU NL SE

(56) References cited :
FR-A- 2 250 469
GB-A- 976 809
GB-A- 1 200 457
US-A- 4 198 784

(73) Proprietor : MacGREGOR, Alexander, R.
8, Terregles Drive
Glasgow, G41 4LX (GB)
Proprietor : Fletcher, William Whigham
9 Beaumont Gate
Glasgow, G12 9EE (GB)
Proprietor : McAlpine, James Edward
2 Stanely Avenue
Paisley, PA2 9LA (GB)

(72) Inventor : MacGREGOR, Alexander, R.
8, Terregles Drive
Glasgow, G41 4LX (GB)
Inventor : Fletcher, William Whigham
9 Beaumont Gate
Glasgow, G12 9EE (GB)
Inventor : McAlpine, James Edward
2 Stanely Avenue
Paisley, PA2 9LA (GB)

(74) Representative : McCallum, William Potter et al
MARKS & CLERK 19 Royal Exchange Square
Glasgow G1 3AE Scotland (GB)

# Description

This invention relates to a water-controlled plant growing system, more particularly water retention and nutrient conservation device for supplying the optimum amount of water and nutrients to a plant pot.

Several plant watering devices of greater or lesser complexity are known. These involve the feeding of a trickle of water continuously into the growing medium, the use of a wick to draw water into the pot by capillary action or the slow permeation of water from a porous reservoir into the growing medium - all such devices are without effective water control.

French patent specification 2250469 discloses an arrangement for supplying water to a plant pot which comprises a reservoir containing water and provided with a number of wicks. The plant pot is positioned above the reservoir and also contains a number of wicks. The wicks in the reservoir are in contact with the wicks in the plant pot so that water is transmitted from the reservoir to the plant pot. The area of contact between the wicks, and thus the amount of water transferred may be varied by rotating the pot relative to the reservoir.

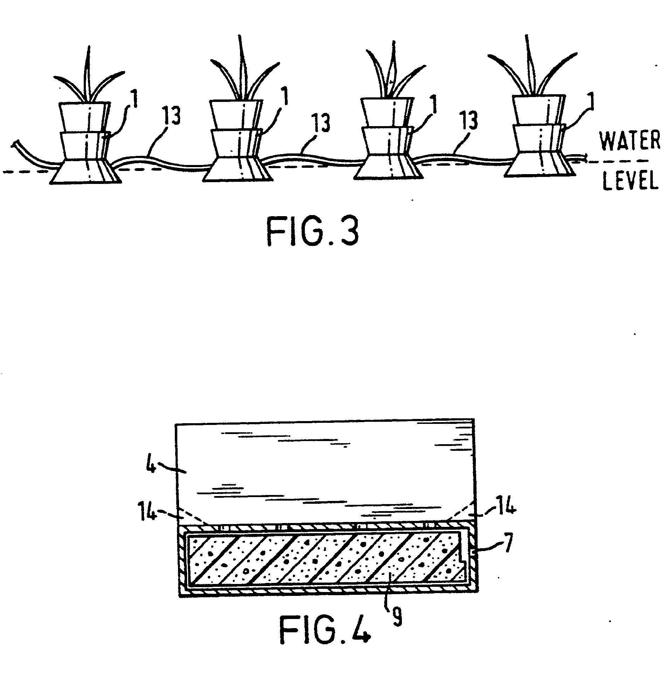

British patent specification 1200457 (Figures 3 and 4) discloses a reservoir containing porous material beneath a projection having apertures therein. The projection is intended to extend up into the base of a plant pot to convey moisture thereto.

The following specifications also describe prior porposals in this area;

GB1146120, GB1173421, GB1267813, GB1513876, GB1592121, GB2035028, GB2095083, GB2107962, and EP AI 0105075.

Most of these proposals include a water reservoir from which water is conveyed to a plant by means of a wick device. With such known devices it is not possible to obtain accurate water control.

It is an object of the invention to provide a device whereby more accurate control over the water supply to a plant may be obtained such that the device may be set to meet the demands of a plant under the prevailing ambient conditions. Thus, for example, a plant kept outdoors in summer can be kept in the same pot and transferred indoors where different moisture-loss conditions prevail by utilizing the device of this invention to regulate the new supply conditions required.

The present invention provides a plant growing system which comprises a device comprising an upper part and a lower part adapted to receive a quantity of an aqueous fluid to form a reservoir of fluid for use by a plant on demand; a plant pot for containing a plant growing medium being received in the upper part, the sidewalls of the pot engaging the upper part in a close-fit arrangement to mitigate fluid losses from the reservoir between the pot and the upper part of the device, the pot having an apertured base; an apertured support plate separating the upper and lower parts of the device, supporting the pot and disposed between the apertured base of the pot and the reservoir;

chararterised in that

the lower part of the device contains a body of porous sponge-like material in the reservoir for absorbing and holding the fluid, the porous material conforming to the shape of the lower part and in an amount substantially filling the lower part so as to ensure that an upper fluid-wetted surface thereof is in close proximity to the apertured support plate; and that the apertures in the pot base and in the plate are unobstructed so as to allow therethrough free fluid flow between the reservoir and the pot; and that the pot is rotatable relative to the device so as to vary the degree of registry of the aperatures in the pot base and in the plate in order to regulate the amount of fluid which passes from the reservoir through the apertures into the pot.

Preferably, the device includes on the external wall of the plant pot, a graduated scale co-operating with an indicator mark on the lower part of the device to indicate the degree of relative axial rotation and hence the extent to which the apertures of the pot are in register with those of the plate.

The upper part of the device preferably has a tapered internal wall so as to, with suitable arrangement, grip in vapour-tight engagement a plant pot of similar shape and dimensions placed therein and may also have a sealing ring of resilient material to provide a seal between the internal wall of the lower part and the external plant pot wall.

In addition, or alternatively to prevent evaporation of water from the reservoir there may be provided on a pot-supporting shoulder situated between the upper and lower parts or on the periphery of the apertured support plate which rests on the shoulder, an annulus of resilient sealing material; so as to ensure that between the shoulder and the apertured plate and/or between the plate and the plant pot base there is a vapour-tight seal which ensures the water vapour will rise through the apertures of the plate and the corresponding apertures of the plant pot base.

In this arrangement, the plant pot may be lifted, separated from the plate and lower part of the vessel, roots inspected and replaced and axially rotated as required.

Alternatively, the lower part of the device may have a conical or vertical wall so as to engage a plant pot of similar shape and dimensions placed therein in a close-fit but which allows axial rotation of the pot within the upper part of the device without lifting the plant pot from the device.

The lower part may be provided with one or two through-bores at an upper or lower level of the reservoir for adding water or nutrients to the reservoir, and these may be used to connect a plurality of the devices in series using tubing.

The upper portion of this device holds and secures the plant pot. The lower part, "the reservoir", contains a porous sponge-like material or other suitable substance for absorbing and holding a fluid comprising water, nutrients or other chemical additions according to need so that the plant pot base in contact with the water or vapour from the reservoir receives when required a constant and uniform supply of water and nutrients which are absorbed by the roots of the plants.

Preferably, the porous material is of size or quantity sufficient to contact the apertured support plate.

A further variation of the device is the insertion between the plant pot base and the fluid in the reservoir, of spacer plates of varying thicknesses having apertures corresponding to those of the support plate and the apertures on the base of the plant pot.

By varying thicknesses of the spacer plates the base of the plant pot can be raised or lowered in relation to the upper fluid-wetted surface of the porous material, thereby increasing or decreasing the air space between the plant pot base and the porous material and consequently increasing or diminishing the amount of water or vapour available for absorption by the soil.

Thus, by varying the thickness of the plates a further regulation of the amount of moisture required by the plant can be obtained, and that amount can again be adjusted by axial rotation of the pot as already described.

The amount of fluid (water and nutrients) which is effectively available and controllable to the plant varies with:

1. the size of the apertures on the base of the plant pot, and

2. the extent of the air space between the base of the plant pot and the moist porous material in the reservoir.

Control is essential since the loss of water from the pot and the plants consequent necessary uptake depends on:

(a) type of plant, eg, Coleus requires more than cacti

(b) the size of the plant - even the same plant requires more water as it grows

(c) size of pot - eg, small pots dry out quicker than large pots, shallow pots more than deep pots

(d) type of pot - thus clay pots dry out quicker than plastic

(e) the temperature, humidity and air motion of the environment

(f) season of the year - eg, plants generally require more in summer than in winter due to diminished metabolism

(g) amount of light - plants require more water in light than in darkness.

In view of all these variables it is fundamental that the optimum relationship between the supply of water and the loss should be capable of regulation as and when required, and this is achieved by means of the device now described. Since the supply of water is related to the base area of the pot available for the supply of water, the total area of the apertures in the pot base and the support plate can be up to approximately 50% of the area of the base of the pot which is in contact with or adjacent to the moisture in the porous material in the reservoir. Using the rotating mechanism in the device the magnitude of the apertures available for absorption of water from the reservoir can be easily regulated from virtually nil to, graduatedly, approximately 50% of the base of the pot base area. This in practice has been found to be more than adequate.

A simple marking gauge on the side of the plant pot and holder can be provided to indicate to the grower the degree of closure or opening of the apertures produced by the rotation of the plant pot in the holder and the moisture made available to the plant can of course also be adjusted by raising or lowering the base of the plant pot from the porous material water level as already described.

The device of this invention may be used in conjuntion with a soil moisture meter, generally available commercially, to adjust the moisture content of the soil for optimum growth conditions.

The height of the upper part of the device may vary up to a maximum of the height of the plant which it holds, but in any case should be of sufficient height as to hold the pot firmly.

The device is preferably shaped so that the base of the lower part is larger in area than the area of the upper open end of the plant pot.

The porous material in the lower portion of the device

is preferably of such a nature that it will

(a)

(1) absorb and hold any water with which it is in contact and will not dry out until the water with which it is in contact in the reservoir has been exhausted,

(2) retain its shape and volume,

(3) present a large proportion of its upper surface as a water area, eg, have a large mesh,

(4) retain indefinitely the qualities set out above when in continuous contact with water and soil constituents.

(b) conform to the shape of the lower part and be thus automatically held in position,

(c) have a cylindrically-shaped upper part which presses against the lower surface of the apertured plate.

(d) allows easy filling of the lower part by allow-ing a spate adjacent to the water filling through-bores which may be fitted with plugs.

The porous material as well as absorbing water may be impregnated with nutrient salts. When it is in close proximity with the base of the plant pot which, of course, has apertures in it, the water and nutrient salts will pass readily from reservoir to the plant pot by capillary action through the porous material.

Since the water loss/supply of the plant is substantially dependent on the relationship between the surface area of the soil in the plant pot which is exposed to the air and the area available for water supply at the base of the pot, the relationship should not be unduly disproportionate.

Since the capillary action and water evaporation forces are always in an upward direction, ie, from the lower part of the reservoir to the roots, the loss of nutrients from the plant pot to the water supply is minimised, thereby ensuring the maximum use by the plant of such fertiliser or nutrient which may be in or have been added to the soil in the plant pot or to the lower part. The lower part may be provided with one or two through-bores at the uppermost level of the reservoir which may be used for adding water and other materials to the reservoir, and the size and volume of the reservoir may be varied to hold any required volume of water and amounts of nutrients having regard to the need of the plants and the length of time till refilling with water is required.

The through-bores may be fitted with releasable plugs or connected to tubes by means of which the device may be connected in series to other device reservoirs or to a larger parent reservoir which is of suitable volume and arrangement to maintain the water level or the daughter reservoirs.

Many plant pots, eg, the common frusto-conical plant pot, especially the smaller sizes, are unstable and the more so when the height of the contained plant increases with growth. The base area of the lower part of this device is preferably greater than the area of the upper surface of the plant pot and this feature together with the weight of water in the reservoir will ensure the stability of the plant pot.

Root growth through the base of the plant pot will normally take place when a space is left between the surface of the "sponge" and the base of the pot-when the roots will seek the water in the reservoir below, and adjust their own water supply.

Since the plant pot can be readily removed from the device, the roots which grow through the apertures in the base of the plant pot can be easily examined and clipped as required and root restriction readily carried out.

Alternatively, the reservoir may be of such size and shape as to be provided with several upper parts which would grip several plant pots which would feed from the common reservoir.

It is preferred that the material of construction of the device of the invention be opaque so as to keep the reservoir in darkness to inhibit algal growth; suitable algicide, fungicide or insecticide of course may be added to the reservoir if necessary, although in the experiments carried out this was found to be unnecessary, the water in the reservoir remaining uncontaminated. Where pots, generally larger in size, are set outside and exposed to rain the bore holes at an appropriate level in device may be left open so that excessive rain water runs off and the disadvantage of sodden soil at the base of the pot is eliminated.

A dip stick arrangement can easily be incorporated in the reservoir, for example, in a filler hole, to indicate the water level in the reservoir.

This invention provides, as confirmed by extensive experiments, a water retention and nutrient conservation device which:

(1) contrives an adequate continuous and uniform L supply of water and nutrients to the plants for long periods without attention, and since there is no unintended intermittent drying out and variation in nutrition, the device promotes healthier plants with substantially improved growth.

(2) allows simple control of the water supply to plants by means of the apertured plate and the raising or lowering of the base of the pot relative to the water level.

(3) by watering from below enhances the growth of the plants.

(4) minimises the need to add nutrients to the plant pot by preventing nutrient loss.

(5) simplifies the addition of water, nutrient, algicides or root fungicides or insecticides as required.

(6) stabilises plant pots against overturn.

(7) allows simple root restriction and plant size control.

(8) removal of the pots for inspection of water contamination and root growth is simple.

(9) prevents sodden soil in outdoor pots by allowing excess water to run off through the bore hole, while the water below the bore hole is still available through the use of the porous material to supply water during long dry periods.

(10) enables accurate comparative plant studies to be carried out since a uniform supply of water can be ensured for each identical experimental pot and device.

The invention will now be described, by way of example with reference to the accompanying drawings, of which:

Fig 1 is a part-sectional view of a plant growing device of this invention;

Fig 2 is a part sectional view of a multiple unit device;

Fig 3 is an illustration of,a plurality of devices, as shown in Fig 1, connected in series;

Fig 4 is an alternative embodiment of the invention for large plant containers;

Fig 5 is a thin section of apertured support plate 13, indicated in Fig 1, on the line A-A shown also in Fig 1;

Fig 6 is an illustration of a graduated scale provided on the external wall of pot 4 and the uppermost rim of the device 1 of this invention;

Fig 7 is a horizontal section on the line B-B shown in Fig 1;

Fig 8 is a plan view of an improved pot of this invention;

Fig 9 is a side view of the pot shown in Fig 8;

Fig 10 is a plan view of an upper part of the device of this invention which is adapted to receive and support the pot shown in Figs 8 and 9 in a close-fit arrangement;

Fig 11 is a side view of the upper part shown in Fig 10;

Fig 12 is a plan view of an apertured disc/spacer required in this invention to act as closure means for the apertures in the pot shown in Figs 8 and 9;

Fig 13 is a side view of the apertured disc shown in Fig 12;

Fig 14 is a plan view of a lower part of the device of the invention;

Fig 15 is a side view of the lower part of the device shown in Fig 14;

Fig 16 is a plan view of a porous body which is in use placed in the lower part shown in Figs 14 and 15;

Fig 17 is a side view of the porous body shown in Fig 16; and

Fig 18 is a part-sectional view of an assembled device showing the location of a dip stick in the lower part of the device.

## FIRST EMBODIMENT

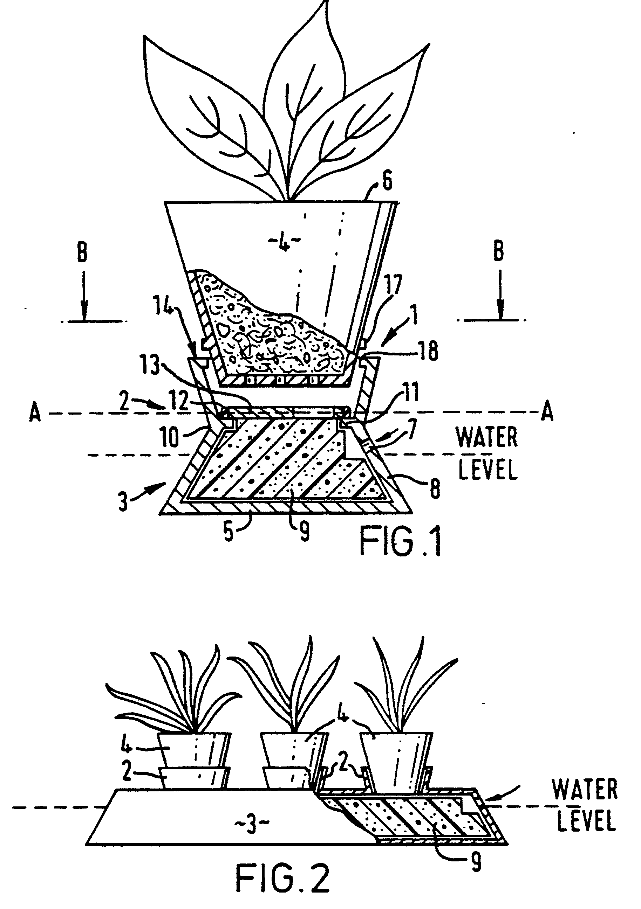

Referring to Fig 1, a plant growing device (1) of this invention, has an upper portion (2) and a lower portion (3).

The upper portion (2) has an inverted frusto-conical configuration of slope conforming to that of a standard mass produced plant pot (4).

The lower portion (3) has a frusto-conical shape of greater slope than the upper portion (2) providing a base (5) of diameter greater than that of the upper rim (6) of the plant pot (4) to provide stability. One or more apertures (only one, (7) is shown) are provided at a high level in a side wall (8) of lower portion (3). The aperture (7) permits feeding of water and other materials into the lower portion. The aperture (7) is provided with a plug (not shown).

A body (9) of foamed plastics sponge fills the interior space of the lower portion, extending to the waist (10) formed at the junction between upper, (2), and lower, (3), portions. If root pruning of the growing plant is contemplated, it is preferable that the sponge should be somewhat smaller in size so as to leave a gap below the level of the waist (10). A cut-out in the body of sponge is provided near the location of the aperture (7) to facilitate entry of water.

Internally, a shoulder (11) is provided at waist level for holding the base of the plant pot (4) and on the shoulder an annulus (12) of resilient sealant material, for example, synthetic rubber, may be provided. Alternatively, the annulus may be located on the internal wall of upper portion (2).

The rim of the device is indicated in Fig 1 by reference (14).

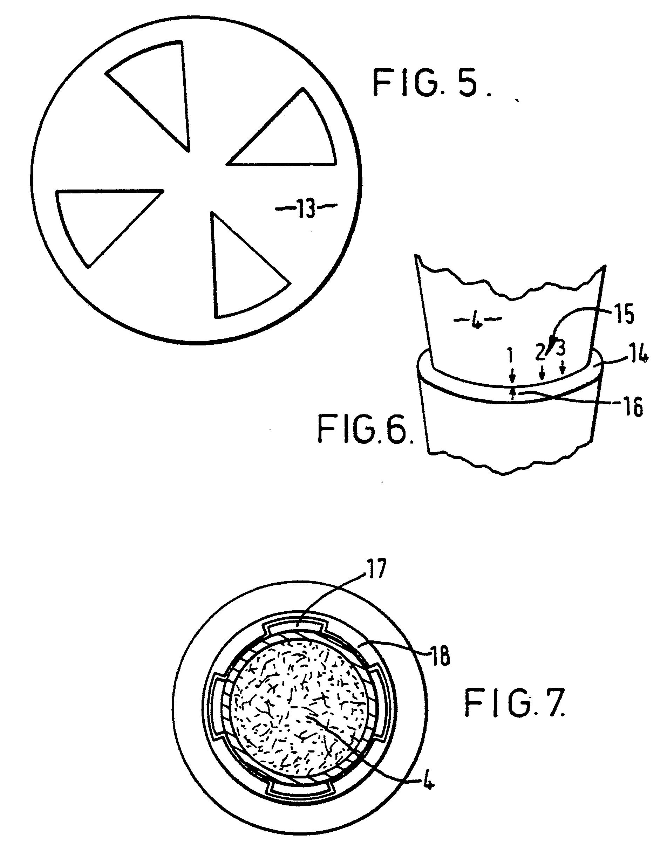

An apertured support plate (13) engages the shoulder (11) and provides support for the pot (4). As shown in Fig 5, the plate (13) has a number of cut-out sectors therein. The pot (4) has an apertured base, the apertures of which may be of the same or different configuration as the plate (13). Thus, depending on the axial orientation of the pot (4) on plate (13) there will be a greater or lesser degree of registration between the base apertures of pot (4) and those of plate (13) thus increasing or decreasing the area of exposure between the growing medium in pot (4) and the water in the reservoir. The plate and pot apertures thus co-act as a variable flow valve.

Thus, in the device shown in Fig 1, there is a net upward flow of water from the lower portion via the sponge by capillary action and a flow of water vapour in the same direction under water vapour pressure. Any nutrients or systemic treatment material added to the lower portion will be carried upward to the roots of the plant. Any material added to the pot is subject to minimum of leaching and, in any case, is not lost but retained in the reservoir of water.

Fig 2 shows a number of upper portions (2) having a common lower portion (3) providing a multiple unit.

Fig 3 shows a number of units of the type shown in Fig 1 having two apertures each and connected in series by tubing (13) thus permitting watering of a number of plants from one end of the series.

Fig 4 shows a large size container for plants sitting upon a lower portion (3) which is provided with an upstanding inwardly tapering rim (14) to engage the container.

Fig 6 is an illustration of the external wall of pot (4) as it enters the device of this invention. The rim (14) of the device (1) is shown. A series of graduation marks (15) is provided on the pot wall and an index mark (16) on the rim (14). (These may, of course, be reversed so that the index mark (16) is on the pot and the graduations on the rim). These markers indicate the relative positions of the pot on the support plate and give the user some guidance as to the degree of exposure of the growing medium to the water in the reservoir. Plants which have a high uptake of water may require maximum exposure whereas other plants may require less.

The device of the invention may also include means for lifting and resting the pot clear of the support plate to stop water flow completely. Many plants require such a rest period, particularly during winter, when they are allowed to dry out partially or completely. The pot (4) may therefore be provided, as shown in Figs 1 and 7, on its outer wall with a series of lugs (17) and the upper portion with a corresponding series of lugs (18) which may conveniently be located on the upper rim. The pot may be raised off the support plate (13) and held clear of the water reservoir on the lugs.

## SECOND EMBODIMENT

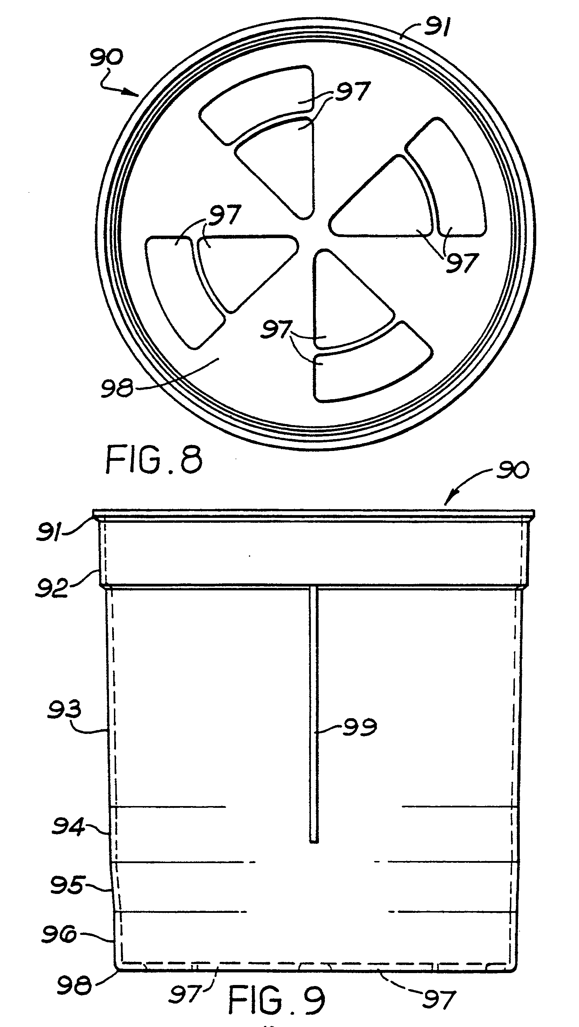

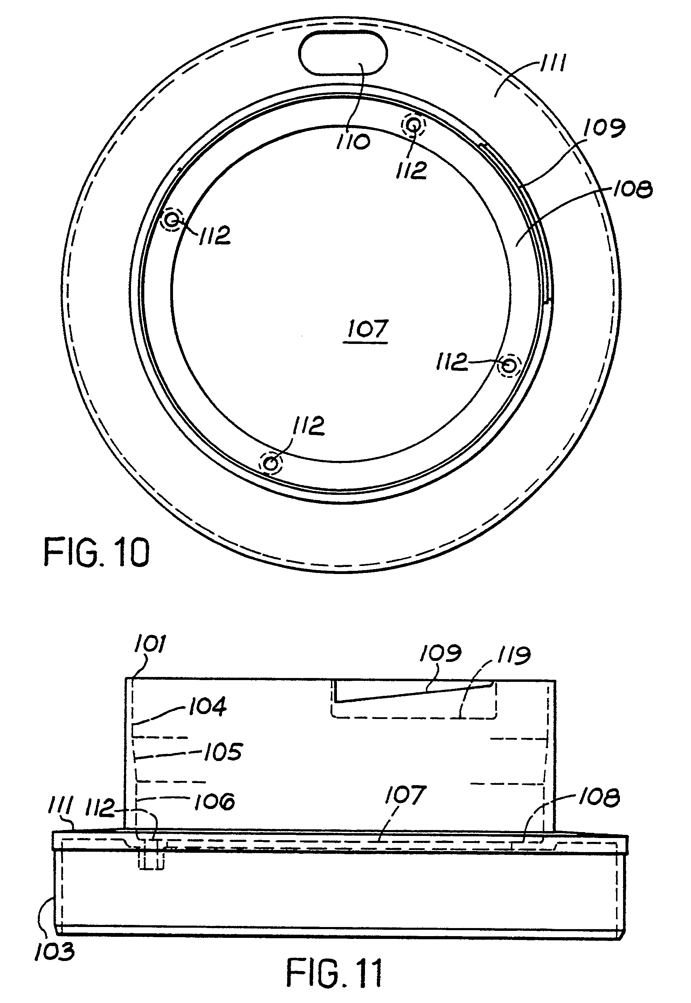

Referring now to Figs 8 and 9, an improved pot (90) is of substantially cylindrical shape, but tapering slightly from top (9) to bottom (98). The side wall thereof comprises an upper cylindrical rim portion (92), a frusto-conical portion (93), a cylindrical portion (94), a further frusto-conical portion (95) and a further cylindrical portion (96). The base (98) of the pot (90) has sector-shaped apertures (97). A rib (99) is provided on the side wall for use as a reference marker in conjunction with a graduated scale on an upper part of the device to be described with reference to Figs 10 and 11.

Figs 10 and 11 show an upper part (100) of the device for supporting and holding the pot (90) in position for growing plants therein.

As can be best seen from Fig 11, the upper part (100) has an annular collar (102), the interior surfaces (101, 105, 106) of which are adapted to engage in a close-fit arrangement with the exterior surfaces (94, 95, 96) of the pot (90). The particular arrangement of said surfaces allows for the elevation of the pot (90) with respect to said upper part (100) by spacer means without loss of a close-fit since the surfaces (94 and 104) and (96 and 106) remain in contact though surfaces (95 and 105) separate.

The collar (102) has a recess (119) formed in the upper edge (101) and inner surface (104). In use, the rib (99) of the pot (90) co-operates with the inclined upper edge (109) of the recess (119) to provide an indication of the degree of rotation of the pot (90) relative to the upper part (100). The rib (99) may have a graduated scale adjacent thereto or marked thereon so that the inclined upper edge (109) may be used to take a reading from the scale. Alternatively, the scale may be provided along the edge (109) of the recess (119) in which case it need not be inclined and the vertical edge of the rib (99) may be used to take a reading from the scale.

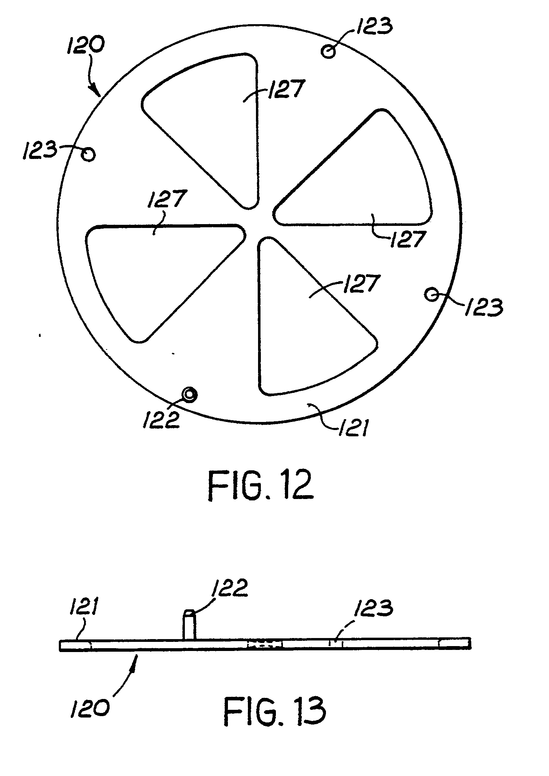

The upper part (100) has a large central aperture (107) which in use is covered by a disc (120) as illustrated in Figs 12 and 13. The disc (120) is prevented from axial rotation within the upper part (100) by locating lug (122) in recess (112) provided in the pot support shoulder (108). Thus, the apertures (127) in the disc (120) are fixed relative to the upper part (100) so that in use rotation of the pot (90) on the disc (120) provides by varying the area of overlap of the apertures (97, 127) a means of restricting the passage of fluid through the upper part (100) of the device to the pot (90) and vice versa.

The upper part (100) of the device is designed to push-fit into the lower part (140) of the device which for reasons of providing a substantial fluid reservoir and stability is preferred to be broader than the base area of the pot (90). This is conveniently brought about by forming the upper part (100) of the device such that a flange area (111) extends outwardly from the lower edge of the outer surface of the collar (102) and from the peripheral edge of this flange area (111) there is provided a depending skirt (103).

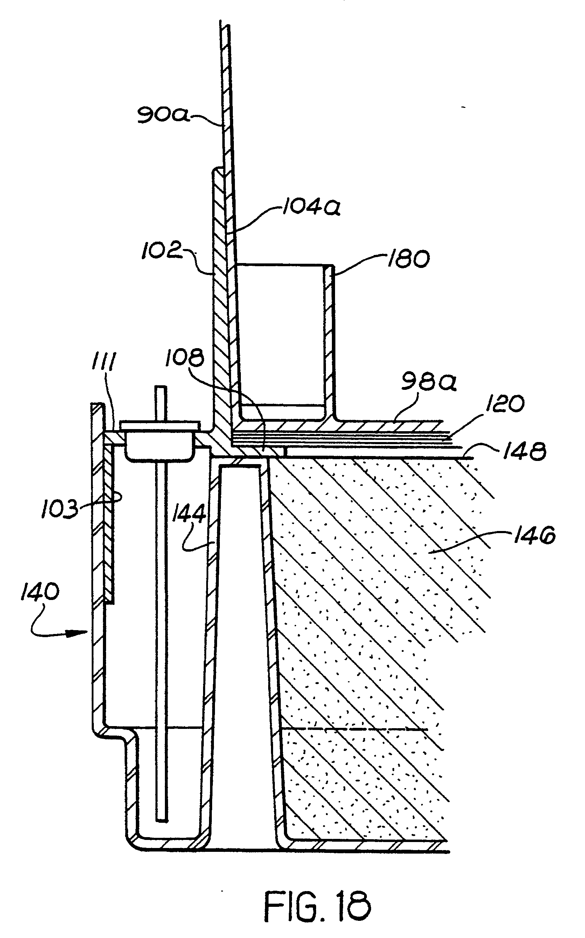

Advantageously, an aperture (110) is provided in the flange area (111) which allows filling of the device with fluid without passing said fluid through the plant growing medium in the pot (90) or requiring removal of the pot (90) from the device. This aperture may conveniently be used to locate a dip stick preferably having apertures at graduated intervals therein for checking fluid level in the device (Fig 18). Incidentally, Fig 18 shows use of a pot (90a) without vertical adjustment and that arrangement relies only on the axial rotation of the pot (90a) for control of fluid passage from the reservoir to the pot (90a).

Referring now to Figs 12 and 13, a closure means or spacer is provided in the form of an apertured disc (120) wherein apertures (127) are of corresponding dimensions to those of the pot (90) so that when the apertures (97) and (127) are brought into register, maximum fluid passage is possible and upon relative rotation the fluid passage is restricted. Apertures (123) are provided in the peripheral edge (121) of the disc (120), and a constant positioning lug (122) is also provided for locating the disc (120) in the recess (112) in shoulder (108) of the upper part (100) of the device or in other discs. Spacer discs may be of the same or different thickness to the first used as a closure means.

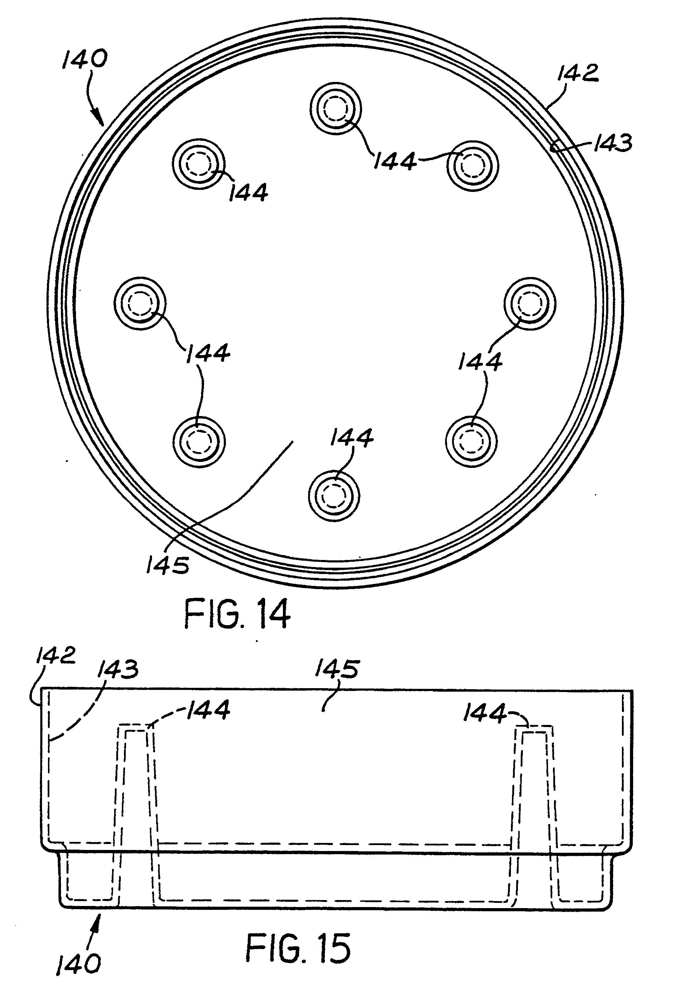

The lower part (140) of the device, which forms a fluid reservoir, as shown in Figs 14 and 15, comprises a cylindrical side wall (142) having an inner surface (143) adapted to engage the skirt (103) of the upper part (100). A plurality of supports (144) are provided in the lower part (140) and in the central void (145) a porous material may be provided.

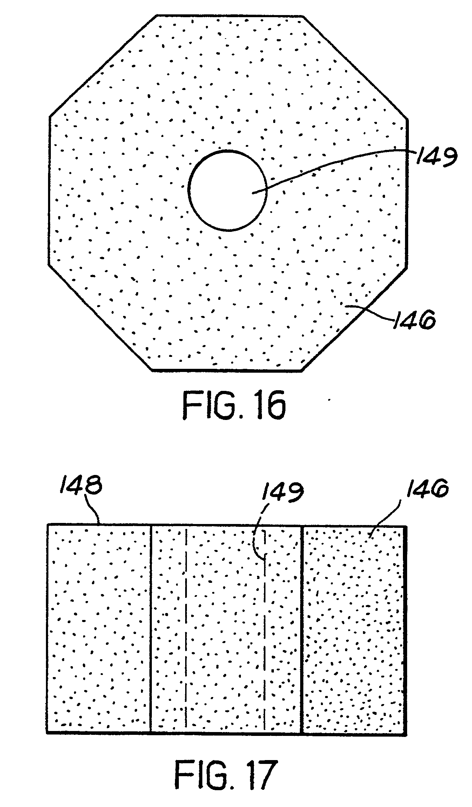

The porous material may be in the form of a shaped body (146) as shown in Figs 16 and 17 which in use will provide an upper fluid-wetted surface (148) in close proximity to the base (98) thereby ensuring that fluid vapour at least may reach the pot (90) when the fluid level in the reservoir is low.

In a modified device, as shown in Fig 18, the pot (90a) is provided with a socket (180) for receiving an upright plant support such as a cane.

## Claims

1. A plant growing system which comprises a device (1) comprising an upper part (2) and a lower part (3) adapted to receive a quantity of an aqueous fluid to form a reservoir of fluid for use by a plant on demand; a plant pot (4) for containing a plant growing medium being received in the upper part, the sidewalls of the pot engaging the upper part in a close-fit arrangement to mitigate fluid losses from the reservoir between the pot and the upper part of the device, the pot having an apertured base; an apertured support plate (13) separating the upper and lower parts of the device, supporting the pot and disposed between the apertured base of the pot and the reservoir; characterised in that the lower part of the device contains a body (9) of porous sponge-like material in the reservoir for absorbing and holding the fluid, the porous material conforming to the shape of the lower part and in an amount substantially filling the lower part so as to ensure that an upper fluid-wetted surface thereof is in close proximity to the apertured support plate; and that the apertures in the pot base and in the plate are unobstructed so as to allow therethrough free fluid flow between the reservoir and the pot; and that the pot is rotatable relative to the device so as to vary the degree of registry of the aperatures in the pot base and in the plate in order to regulate the amount of fluid which passes from the reservoir through the apertures into the pot.

2. A system as claimed in claim 1, in which the apertures in the support plate are substantially sector-shaped.

3. A system as claimed in claim 1 or 2, in which the support plate has a peripheral seal.

4. A system as claimed in claim 1, in which said lower part (3) is provided with at least one aperture (7) for permitting the introduction of fluid into the lower part.

5. A system as claimed in claim 1, in which tube means (13) is provided for interconnecting the lower parts of a plurality of devices whereby said plurality can be filled with fluid simultaneously.

6. A system as claimed in claim 1, in which the lower part (3) is provided with a plurality of upper parts (2) each for receiving a plant pot.

7. A system as claimed in claim 1, in which the lower part (3) is provided with a dip-stick for checking the level of fluid contained therein.

8. A system as claimed in claim 1, which is provided with means for variably raising the pot relative to the device in order to space the apertures in the plant pot base from the apertured support plate of the device.

9. A system as claimed in claim 8, in which the raising means comprises a ramp (109) formed on a respective one of the device and plant pot and a cooperating abutment (99) formed on the other component whereby, a relative rotation between the plant pot and the device, the pot is caused to be raised relative to the device.

## Patentansprüche

1. Pflanzenkultur-Vorrichtung mit einer Behältervorrichtung (1), die einen oberen Teilbereich (2) aufweist, und die einen unteren Teilbereich (3), der so ausgestaltet ist, daß er eine Menge einer wässrigen Flüssigkeit aufnehmen kann, um ein Flüssigkeitsreservoir zu bilden, das eine Pflanze nach Bedarf nutzen kann, mit einem in dem oberen Teilbereich der Behältervorrichtung eingepaßten Pflanztopf (4), der ein Pflanzenkultursubstrat enthält, wobei die Seitenwände des Topfes in den oberen Teilbereich in dichtschließender Anordnung eingepaßt sind, um Flüssigkeitsverluste aus dem Reservoir zwischen Topf und oberem Teilbereich der Behältervorrichtung zu verringern, wobei der Topf einen mit Öffnungen versehenen Boden hat, und mit einer mit Öffnungen versehenen Tragplatte (13), die den oberen und den unteren Teilbereich trennt, den Topf trägt und die zwischen der mit Öffnungen versehenen Tragplatte und dem Reservoir angeordnet ist, dadurch gekennzeichnet, daß der untere Teilbereich der Behältervorrichtung in dem Reservoir einen Körper (9) aus einem porösen, schwammartigen Material enthält, das die Flüssigkeit absorbiert und hält, wobei das poröse Material in einer Menge, die den unteren Teilbereich im wesentlichen ausfüllt, der Form des unteren Teilbereiches angepaßt ist, um sicherzustellen, daß sich eine obere, flüssigkeitsbenetzte Oberfläche aus diesem Material in unmittelbarer Nähe zu der von Öffnungen durchbrochenen Trägerplatte befindet, und daß die Öffnungen im Topfboden und in der Trägerplatte frei durchgängig sind, und daher ein ungehinderter Fluß zwischen Reservoir und Topf ermöglicht wird, und daß der Topf, bezogen auf die Behältervorrichtung, drehbar ist, so daß das Ausmaß der Deckung der Öffnungen in Topfboden und Trägerplatte zu variieren ist, um die Flüssigkeitsmenge, die aus dem Reservoir durch die Öffnungen in den Topf übergeht, zu regulieren.

2. Pflanzenkulturvorrichtung nach Anspruch 1, dadurch gekennzeichnet, daß die Öffnungen in der Trägerplatte im wesentlichen sektorenweise ausgebildet sind.

3. Pflanzenkulturvorrichtung nach Anspruch 1 oder 2, wobei die Trägerplatte eine periphere Abdichtung hat.

4. Pflanzenkultuvorrichtung nach Anspruch 1, wobei der untere Teilbereich (3) mit zumindest einer Öffnung (7) versehen ist, damit die Zuführung von Flüssigkeit in den unteren Teilbereich ermöglicht wird.

5. Pflanzenkulturvorrichtung nach Anspruch 1, wobei Schlauchmittel (13) vorgesehen sind, durch die die unteren Teilbereiche einer Mehrzahl von Behältervorrichtungen untereinander verbunden sind, wodurch diese Mehrzahl von Behältervorrichtungen gleichzeitig mit Flüssigkeit befüllt werden kann.

6. Pflanzenkulturvorrichtung nach Anspruch 1, wobei der untere Teilbereich (3) mit einer Mehrzahl von oberen Teilbereichen (2) versehen ist, deren jeder einen Pflanztopf aufnimmt.

7. Pflanzenkulturvorrichtung nach Anspruch 1, wobei der untere Teilbereich (3) mit einem Tauchstab zur Kontrolle des Flüssigkeitsstandes darin versehen ist.

8. Pflanzenkulturvorrichtung nach Anspruch 1, dadurch gekennzeichnet, daß Mittel zu variablen Anheben des Topfes, bezogen auf die Behältervorrichtung, vorhanden sind, damit die Öffnungen im Boden des Pflanzentopfes von den Öffnungen der Trägerplatte der Behältervorrichtung beabstandet werden können.

9. Pflanzenkulturvorrichtung nach Anspruch 8, wobei die Mittel zum Anheben eine Schrägstrecke (109) aufweisen, die jeweils an der Behältervorrichtung oder am Pflanztopf ausgeformt ist, und eine Gegenstrecke (99), die an der jeweils anderem Komponente ausgeformt ist, wodurch bei einer relativen Drehung zwischen Pflanztopf und Behältervorrichtung der Topf, bezogen auf den Behälter, angehoben wird.

## Revendications

1. Système de culture de plantes, qui comprend un dispositif (1) comportant une partie supérieure (2) et une partie inférieure (3) apte à recevoir une quantité d'un liquide aqueux de manière à former un réservoir pour un fluide destiné à être utilisé à volonté par une plante; un pot (4) destiné à loger un milieu de croissance de la plante et logé dans la partie supérieure, les parois latérales du pot s'appliquant contre la partie supérieure d'une manière étroitement ajustée afin de réduire les pertes du fluide à partir du réservoir entre le pot et la partie supérieure du dispositif, le pot possédant une base perforée; une plaque de support perforée (13) séparant les parties supérieure et inférieure du dispositif et supportant le pot et disposée entre la base perforée du pot et le réservoir; caractérisé en ce que la partie inférieure du dispositif contient un corps (9) réalisé en un matériau poreux en forme d'éponge, situé dans le réservoir de manière à absorber et retenir le fluide, le matériau poreux ayant une forme adaptée à celle de la partie inférieure et étant présent en une quantité telle qu'il remplit pour l'essentiel la partie inférieure de manière à garantir qu'une surface supérieure, mouillée par le fluide, de cette partie inférieure, est à proximité directe de la plaque perforée de support; et que les ouvertures ménagées dans la base du pot et dans la plaque ne sont pas obstruées afin de permettre un écoulement libre du fluide entre le réservoir et le pot; et que le pot peut tourner par rapport au dispositif de manière à modifier le degré d'alignement des ouvertures situées dans la base du pot et dans la plaque afin de régler la quantité du fluide qui est transférée du réservoir dans le pot, par l'intermédiaire des trous.

2. Système selon la revendication 1, dans lequel les trous ménagés dans la plaque de support possèdent essentiellement une forme de secteur.

3. Système selon la revendication 1 ou 2, dont la plaque de support possède un joint d'étanchéité périphérique.

4. Système selon la revendication 1, dans lequel ladite partie inférieure (3) comporte au moins un trou (7) permettant l'introduction du fluide dans la partie inférieure.

5. Système selon la revendication 1, dans lequel des moyens en forme de tuyaux (13) sont prévus pour interconnecter les parties inférieures d'une pluralité de dispositifs, ce qui permet de remplir simultanément ladite pluralité de dispositifs avec le fluide.

6. Système selon la revendication 1, dans lequel la partie inférieure (30) est équipée d'une pluralité de parties supérieures (2) destinées à recevoir chacune un pot pour une plante.

7. Système selon la revendication 1, dans lequel la partie inférieure (30) est équipée d'une jauge servant à contrôler le niveau du fluide contenu dans la partie inférieure.

8. Système selon la revendication 1, qui est équipé de moyens permettant de soulever de façon variable le pot par rapport au dispositif de manière à écarter les trous ménagés dans la base du pot contenant la plante, de la plaque de support perforée du dispositif.

9. Système selon la revendication 8, dans lequel les moyens de soulèvement comprennent une rampe (109) formée sur l'un respectif des éléments suivants : le dispositif, le pot logeant la plante et une butée coopérante (99) formée sur l'autre composant, ce qui a pour effet que lors d'une rotation relative entre le pot recevant la plante et le dispositif, le pot est soulevé par rapport au dispositif.

FIG.1

FIG.2

FIG.3

FIG.4

FIG. 5.

—13—

—4—

15

1  2 3

14

16

FIG.6.

17

18

4

FIG.7.

FIG.8

FIG.9

111

109

110

112

112

108

112

107

112

112

FIG. 10

101

109    119

104

105

106

111  112

107

108

103

FIG. 11

FIG. 12

FIG. 13

140

142

143

144

144

144

144

144

144

145

## FIG. 14

142

143

144

145

144

140

## FIG. 15

FIG. 16

FIG. 17

16

FIG. 18